# EUROPÄISCHE PATENTSCHRIFT

(11) **EP 2 355 997 B1**
(45) Veröffentlichungstag und Bekanntmachung des Hinweises auf die Patenterteilung: **15.08.2012**
(21) Anmeldenummer: 09783115.0
(22) Anmeldetag: 17.09.2009
(51) Int. Cl.: B60R 21/0136, G01P 15/00

(54) **DRUCKSENSOR**
PRESSURE SENSOR
CAPTEUR DE PRESSION

(30) Priorität: 11.11.2008 DE 102008043644
(43) Veröffentlichungstag der Anmeldung: 17.08.2011
(73) Patentinhaber: Robert Bosch GmbH, 70442 Stuttgart (DE)
(72) Erfinder: KUNERT, Peter, 72805 Lichtenstein (DE)
(86) Internationale Anmeldenummer: PCT/EP2009/062048
(87) Internationale Veröffentlichungsnummer: WO 2010/054881

(56) Entgegenhaltungen:
- DE-A1-102006 040 216
- DE-A1-102006 051 295
- US-A1- 2006 236 749

## Beschreibung

### Stand der Technik

Die vorliegende Erfindung bezieht sich auf einen Drucksensor gemäß Anspruch 1, der als Airbagsensor eines Fahrzeugs geeignet ist.

### Offenbarung der Erfindung

Die DE 10 2006 024 666 A1 befasst sich mit einer Vorrichtung zur Aufpralldetektion, bei der in Abhängigkeit von einem Signal wenigstens eines Luftdrucksensors, der in einem Seitenteil eines Fahrzeugs angeordnet ist, der Aufprall detektiert wird.

Beim Seitenairbagsensor auf Drucksensorbasis (PPS: Peripheral Pressure Sensor) wird der Airbag im Crashfall aufgrund der Druckänderung in einem geschlossenen Volumen, z.B. einer Fahrzeugtür ausgelöst. Der Schutz des Drucksensors gegen Medien und Feuchte ist dabei aufwendig realisiert.

Die Ausführung des Drucksensors mit einer dünnen Folie als Druckmembrane verändert das Ansprechverhalten des Sensors erheblich. Insbesondere wird die Empfindlichkeit des Drucksensors stark reduziert und dynamische Druckänderungen können nicht ausreichend genau detektiert werden.

Die DE 10 2006 051 295 A1 beschreibt ein Sensorelement für einen Kollisionssensor. Dabei ist ein Strömungsmesser in einem mittleren Abschnitt einer Kammer angeordnet, die einen sich konisch verjüngenden vorderen Abschnitt, den mittleren Abschnitt und einen sich konisch weitenden hinteren Abschnitt aufweist.

Vor diesem Hintergrund wird mit der vorliegenden Erfindung ein Drucksensor gemäß Anspruch 1 vorgestellt, der als Airbagsensor eines Fahrzeugs geeignet ist. Vorteilhafte Ausgestaltungen ergeben sich aus den jeweiligen Unteransprüchen und der nachfolgenden Beschreibung.

Die Erfindung basiert auf der Erkenntnis, dass dynamische Druckänderungen in der Umgebung des Drucksensors durch eine gezielte Anordnung eines Sensorelements, einer Membran und eines Referenzvolumens verstärkt werden können. Dazu wird eine mechanische Verstärkung eines Drucksignals für einen PPS-Drucksensor mit Membran vorgeschlagen.

Vorteilhafterweise durch den erfindungsgemäßen Ansatz dynamische Druckänderungen mit einer ausreichenden Genauigkeit detektiert und ausgewertet werden.

Die vorliegende Erfindung schafft einen Drucksensor, der als Airbagsensor eines Fahrzeugs geeignet ist, mit folgenden Merkmalen: einer Druckkammer mit einer kleinen Öffnung und einer großen Öffnung; einem Drucksensorelement mit einer Druckaufnahmefläche, wobei das Drucksensorelement ausgebildet ist, um die kleine Öffnung zumindest mit der Druckaufnahmefläche zu verschließen; und einer Membran, die ausgebildet ist, um die große Öffnung zu verschließen.

Die Druckkammer kann einerseits durch die Membran und andererseits durch das Drucksensorelement vollständig abgeschlossen sein. Das Drucksensorelement kann ein beliebiges Element sein, das geeignet ist, um den Druck in der Druckkammer zu erfassen und ein, dem Druck entsprechendes Senorsignal bereitzustellen. Die Druckerfassung erfolgt dabei über die Druckaufnahmefläche des Drucksensorelements. Die die Druckaufnahmefläche weist eine kleinere Fläche als die Membran auf. Somit kann die kleine Öffnung der Druckkammer einen kleineren Querschnitt oder eine kleinere Öffnungsfläche als die große Öffnung aufweisen. Durch die unterschiedliche Größe der Öffnungen kann die Form der Druckkammer so angepasst werden, dass die Fläche der Membran möglichst groß, die Fläche der Druckaufnahmefläche möglichst klein und das durch die Druckkammer abgeschlossene Volumen möglichst klein ist.

Gemäß einer Ausgestaltung kann die Druckkammer einen sich in Richtung der kleinen Öffnung verjüngenden Wandabschnitt aufweisen. Auf diese Weise kann das Volumen der Druckkammer reduziert und die Qualität der Druckübertragung auf die Druckaufnahmefläche erhöht werden.

Dabei kann der sich verjüngende Wandabschnitt geradlinig ausgebildet sein. Die geradlinige Ausführung ist kostengünstig zu realisieren.

Alternativ kann der sich verjüngende Wandabschnitt gebogen ausgebildet ist. Dies ermöglicht eine weitere Reduzierung des Volumens der Druckkammer.

Die Membran kann bei einem maximal zu erfassenden Druck eine vorbestimmte Wölbung aufweisen. Demnach kann der sich verjüngende Wandabschnitt eine Form aufweisen, die an die vorbestimmte Wölbung angepasst ist, so dass die Membran bei dem maximal zu erfassenden Druck zumindest abschnittsweise parallel zu dem sich verjüngenden Wandabschnitt verläuft. Auf diese Weise kann das Volumen der Druckkammer auf einen minimalen Wert reduziert werden. Der maximal zu erfassenden Druck kann eine obere Druckgrenze des Einsatzbereichs des Drucksensors definieren.

Ferner kann die Druckkammer einen zylindrischen Wandabschnitt aufweisen, der zwischen der kleinen Öffnung und dem sich verjüngenden Wandabschnitt angeordnet ist. Somit kann die Druckkammer trichterförmig ausgebildet sein.

Die kleine und/oder die große Öffnung der Druckkammer können einen rechteckigen Querschnitt aufweisen.

Gemäß einer Ausgestaltung kann der Drucksensor ein Druckausgleichselement aufweisen, das ausgebildet ist, um einen Druckausgleich zwischen der Druckkammer und einer Umgebung des Drucksensors zu schaffen. Auf diese Weise können beispielsweise atmosphärisch bedingte Luftdruckänderungen ausgeglichen werden.

Ferner kann der Drucksensor eine Abdeckung aufweisen, die ausgebildet ist, um eine der Druckkammer gegenüberliegende Seite der Membran abzudecken. Die Abdeckung kann als Schutz vor mechanischen Beschädigungen der Membran dienen.

Dabei kann die Abdeckung eine Öffnung mit einem angrenzenden Druckeinlasskanal aufweisen, wobei der Druckeinlasskanal die Öffnung vollständig überspannt. Somit kann einerseits der Umgebungsdruck direkt auf die Membran einwirken, andererseits ist die Membran beispielsweise gegenüber Spritzwasser geschützt.

Es handelt sich vorliegend um einen Luftdrucksensor.

Die Erfindung wird nachstehend anhand der beigefügten Zeichnungen beispielhaft näher erläutert. Es zeigen:
- Fig. 1: eine Darstellung eines Drucksensors gemäß einem Ausführungsbeispiel der vorliegenden Erfindung; und
- Fig. 2: eine weitere Darstellung des erfindungsgemäßen Drucksensors.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

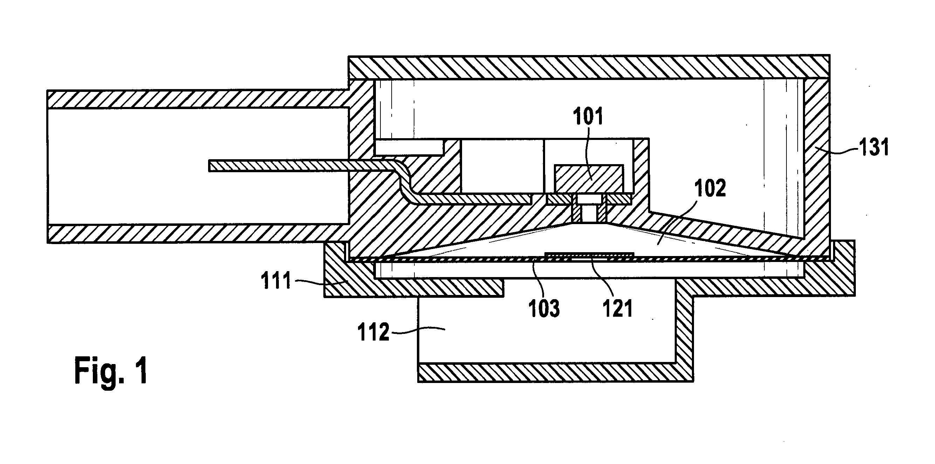

Fig. 1 zeigt eine Darstellung eines Drucksensors gemäß einem Ausführungsbeispiel der vorliegenden Erfindung. Der Drucksensor kann beispielsweise als Airbagsensor eines Fahrzeugs eingesetzt werden. Dazu kann der Drucksensor eine, durch eine Kollision hervorgerufene Druckänderung erfassen und ein entsprechendes Steuersignal an ein Airbag-Steuergerät bereitstellen. Insbesondere kann der Drucksensor ausgebildet sein, um schnelle Druckspitzen zu detektieren. Zur Druckerfassung kann der Drucksensor beispielsweise in einer Tür eines Fahrzeugs angeordnet sein.

Der Drucksensor weist ein Drucksensorelement 101, eine Druckkammer 102 und eine Membran 103 auf. Die Druckkammer 102 ist zwischen dem Drucksensorelement 101 und der Membran 103 angeordnet. Die Druckkammer 102 weist eine kleine Öffnung und eine große Öffnung auf. Die kleine Öffnung kann gegenüberliegend zu der großen Öffnung angeordnet sein. Die kleine Öffnung der Druckkammer 102 wird von dem Drucksensorelement 101 und insbesondere von einer Druckaufnahmefläche des Drucksensorelements 101 abgeschlossen. Die Druckaufnahmefläche ist zur Erfassung des Drucks innerhalb der Druckkammer 102 ausgebildet. Die große Öffnung der Druckkammer 102 wird von der Membran 103 abgeschlossen. Somit umfasst die Druckkammer 102 ein geschlossenes Volumen. Ändert sich der Druck außerhalb des Drucksensors, so bewirkt dies eine Formänderung der Membran 103 und somit eine Druckänderung innerhalb der Druckkammer 102. Die Druckänderung kann von dem Drucksensorelement 101 erfasst werden.

Dabei bewirkt die Druckkammer 102 eine Umsetzung eines großen Volumens auf ein kleines Volumen. Insbesondere wird eine große Druckangriffsfläche der Membran 103 auf eine kleine Druckangriffsfläche des Drucksensorelements 101 übersetzt. Dadurch kann eine Druckänderung außerhalb der Druckkammer 102 verstärkt werden und exakter durch das Drucksensorelement 101 erfasst werden.

Gemäß diesem Ausführungsbeispiel ist die Druckkammer 102 trichterförmig ausgebildet. Ein an die Membran 103 angrenzender, umlaufender Wandbereich der Druckkammer verjüngt sich kegelförmig in Richtung des Drucksensorelements 101. Die Wände können dabei gradlinig verlaufen. Ein an das Drucksensorelements 101 angrenzender, umlaufender Wandbereich der Druckkammer kann zylinderförmig ausgebildet sein. Gemäß diesem Ausführungsbeispiel ist ein Abstand zwischen der Membran 103 und dem Drucksensorelements 101 geringer als ein Durchmesser der großen Öffnung der Druckkammer 102 bzw. der Membran 103.

Der sich verjüngende Wandbereich kann auch bogenförmig oder parabelförmig ausgebildet sein. Insbesondere kann der sich verjüngende Wandbereich, an eine Biegelinie der Membran angepasst sein, die sich bei einem maximal von dem Drucksensor zu erfassenden Druck einstellt. Auf diese Weise kann das Volumen der Druckkammer 102 möglichst gering gehalten werden. Dennoch kann gewährleistet werden, dass die Membran 102 im Messbereich des Drucksensors nicht an eine Innenwand der Druckkammer 102 anstößt.

Die von der Membran 103 und die von dem Drucksensorelement 101 verschlossenen Öffnungen der Druckkammer 102 können rechtwinklig ausgeformt sein.

Alternativ kann auch ein runder, ovaler oder andersartiger Querschnitt gewählt werden.

Gemäß diesem Ausführungsbeispiel weist der Drucksensor eine Abdeckung 111 auf, die die Membran 103 auf der, der Druckkammer 102 gegenüberliegenden Seite umschließt. Die Abdeckung 111 weist eine Öffnung auf, auf die ein Druckeinlasskanal 112 aufgesetzt ist. Durch den Druckeinlasskanal 112 und die Öffnung in der Abdeckung 111 ist die Membran 113 direkt mit einer Umgebung des Drucksensors verbunden. Der Druckeinlasskanal 112 verläuft auf der, der Membran 103 abgewandten Seite der Abdeckung 111 von einer Seite des Drucksensors, parallel zu der Membran 113 bis zu der Öffnung in der Abdeckung 111. Die Öffnung in der Abdeckung 111 wird durch den Druckeinlasskanal 112 vollständig überspannt und somit gegen äußere Einflüsse abgeschirmt.

Der Drucksensor kann so in einer Tür eines Fahrzeugs angeordnet sein, dass sich die Membran 103 und somit auch der Druckeinlasskanal 112 auf der Unterseite des Drucksensors befinden.

Der Drucksensor kann optional ein Druck-Ausgleichs-Element (DAE) 121 aufweisen. Dabei können bekannte Druck-Ausgleichs-Elemente 121 eingesetzt werden, die geeignet sind, um einen Druckausgleich zwischen der Druckkammer 102 und einer Umgebung des Drucksensors zu schaffen. Gemäß diesem Ausführungsbeispiel weist die Membran 103 das Druck-Ausgleichs-Element 121 auf. Das Druck-Ausgleichs-Element 121 kann als Gore-Membran ausgeführt sein.

Der Drucksensor kann ferner ein Gehäuse 131 aufweisen, dass die Druckkammer 102 und das Drucksensorelement 101 umschließt.

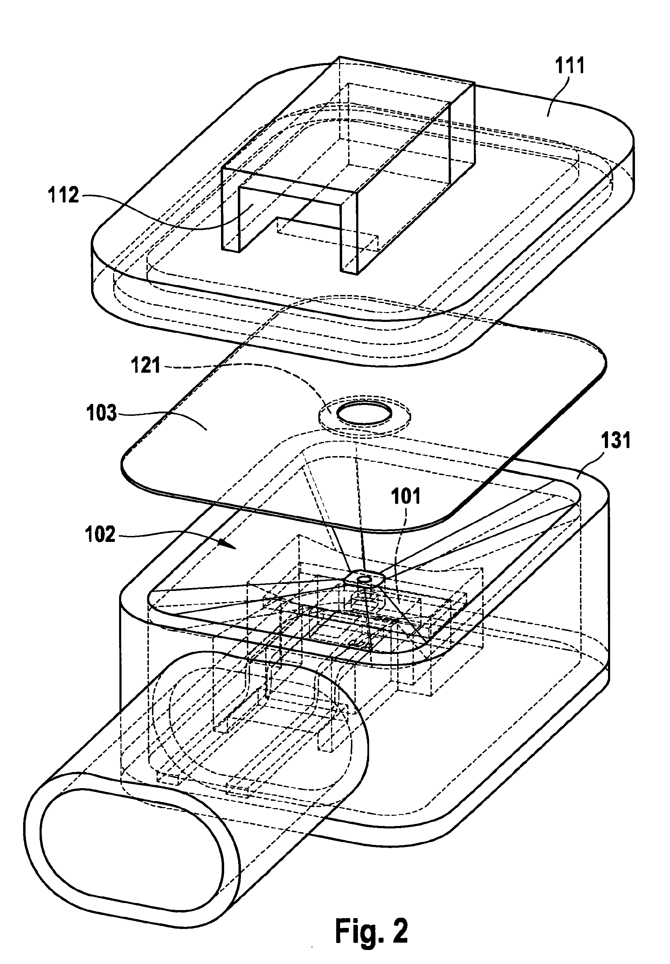

Fig. 2 zeigt eine weitere dreidimensionale Darstellung des in Fig. 1 gezeigten Drucksensors. Insbesondere ist die Abdeckung 111 mit dem Druckeinlasskanal 112 gezeigt. Die Abdeckung ist als Deckel ausgebildet, der Schutz vor mechanischer Beschädigung der Membran 103 bietet. Die Membran 103 weist eine rechteckige Form mit abgerundeten Ecken auf. In der Mitte weist die Membran 103 eine runde Öffnung auf, die von dem Druck-Ausgleichs-Element 121 abgeschlossen ist.

Ferner ist in Fig. 2 das Gehäuse 131 gezeigt, in dem die als Trichter ausgebildete Druckkammer 102 angeordnet ist. Die Druckkammer 102 kann durch das Gehäuse 131 gebildet werden.

Der erfindungsgemäße Drucksensor weist eine integrierte mechanische Druckverstärkung in Form der Druckkammer 102 sowie die Membran 103 auf. Bei der Membran 103 kann es sich um eine beliebige, geeignete Druckmembran, beispielsweise in Form einer dünnen Folie handeln.

Die Qualität einer Druckübertragung über die Membran 103 hängt von mehreren Faktoren ab. So wird die Druckübertragung durch die Dicke der Membran, ein Elastizitäts-Modul der Membran, eine Kantenlänge der Membran, ein geschlossenes Volumen hinter der Membran sowie den anliegender Druck beeinflusst. Die Faktoren gehen in unterschiedlicher Gewichtung in den Zusammenhang ein, der die Qualität der Druckübertragung bestimmt. Die Kantenlänge der Membran stellt dabei jedoch den größten Einflussfaktor dar.

Um das geschlossene Volumen hinter der Membran 103 konstant zu halten, wird bei einer Erhöhung der Kantenlänge der Membran 103, die Höhe des eingeschlossenen Volumens entsprechend reduziert. Das eingeschlossene Volumen entspricht dabei dem Volumen der Druckkammer 102. Wird das geschlossene Volumen 102 hinter der Membran 103 weiter reduziert, so führt eine Durchbiegung der Membran 103 durch den äußeren Druck zu einem stärkeren Druckanstieg im geschlossenen Volumen 102. Dieser Druckanstieg kann entsprechend leicht detektiert werden.

Durch eine Gestaltung des geschlossenen Volumens 102 als Trichter oder ähnlichem kann das Volumen 102 stark reduziert und trotzdem ein ausreichender Freiraum für die, sich durch eine Druckerhöhung ergebende Durchbiegung der Membran 103 realisiert werden.

Durch einen Abgleich der Membrangröße und des geschlossenen Volumens 102 kann die erforderliche Empfindlichkeit des Sensors beliebig eingestellt und der Arbeitspunkt optimal festgelegt werden. Der Abgleich kann während der Konstruktion oder der Herstellung des Drucksensors durchgeführt werden. Somit kann der Drucksensor an unterschiedliche Einsatzbereiche angepasst werden.

Um den Einfluss statischer Druckänderungen auszuschließen kann die Druckmembran 103 oder das eingeschlossene Volumen 102 über das Druckausgleichselement 121 belüftet werden.

Die beschriebenen Ausführungsbeispiele sind nur beispielhaft gewählt und können miteinander kombiniert werden.

## Patentansprüche

1. Drucksensor, der als Airbagsensor eines Fahrzeugs geeignet ist, mit folgenden Merkmalen:
einer Druckkammer (102) mit einer kleinen Öffnung und einer großen Öffnung;
einem Drucksensorelement (101) mit einer Druckaufnahmefläche, und
einer Membran (103), die ausgebildet ist, um die große Öffnung zu verschließen.
**dadurch gekennzeichnet dass** das Drucksensorelement ausgebildet ist, um die kleine Öffnung zumindest mit der Druckaufnahmefläche vollständig zu verschließen

2. Drucksensor gemäß Anspruch 1, bei dem die Druckkammer (102) einen sich in Richtung der kleinen Öffnung verjüngenden Wandabschnitt aufweist.

3. Drucksensor gemäß Anspruch 2, bei dem der sich verjüngende Wandabschnitt geradlinig ausgebildet ist.

4. Drucksensor gemäß Anspruch 2, bei dem der sich verjüngende Wandabschnitt gebogen ausgebildet ist.

5. Drucksensor gemäß Anspruch 2, bei dem die Membran (103) bei einem maximal zu erfassenden Druck eine vorbestimmte Wölbung aufweist und bei dem der sich verjüngenden Wandabschnitt eine Form aufweist, die an die vorbestimmten Wölbung angepasst ist, so dass die Membran bei dem maximal zu erfassenden Druck zumindest abschnittsweise parallel zu dem sich verjüngenden Wandabschnitt verläuft.

6. Drucksensor gemäß einem der Ansprüche 3 bis 5, bei dem die Druckkammer (102) einen zylindrischen Wandabschnitt aufweist, der zwischen der kleinen Öffnung und dem sich verjüngenden Wandabschnitt angeordnet ist.

7. Drucksensor gemäß einem der vorangegangenen Ansprüche, mit einem Druck-Ausgleichs-Element (121), das ausgebildet ist, um einen Druckausgleich zwischen der Druckkammer (102) und einer Umgebung des Drucksensors zu schaffen.

8. Drucksensor gemäß einem der vorangegangenen Ansprüche, bei dem die kleine und/oder die große öffnung einen rechteckigen Querschnitt aufweist.

9. Drucksensor gemäß einem der vorangegangenen Ansprüche, mit einer Abdeckung (11), die ausgebildet ist, um eine der Druckkammer (102) gegenüberliegende Seite der Membran (103) abzudecken.

10. Drucksensor gemäß Anspruch 7, bei der die Abdeckung (111) eine Öffnung mit einem angrenzenden Druckeinlasskanal (112) aufweist, wobei der Druckeinlasskanal die Öffnung vollständig überspannt.

## Claims

1. Pressure sensor, which is suitable as an airbag sensor of a vehicle, with the following features:
a pressure chamber (102) having a small orifice and a large orifice;
a pressure sensor element (101) having a pressure pick-up surface, and
a diaphragm (103) which is designed to close the large orifice,
**characterized in that**
the pressure sensor element is designed to close the small orifice completely at least by means of the pressure pick-up surface.

2. Pressure sensor according to Claim 1, in which the pressure chamber (102) has a wall portion tapering in the direction of the small orifice.

3. Pressure sensor according to Claim 2, in which the tapering wall portion is formed rectilinearly.

4. Pressure sensor according to Claim 2, in which the tapering wall portion is a bent form.

5. Pressure sensor according to Claim 2, in which the diaphragm (103) has a predetermined curvature in the case of a maximum pressure to be detected, and in which the tapering wall portion has a shape which is adapted to the predetermined curvature, so that, in the case of the maximum pressure to be detected, the diaphragm runs, at least in portions, parallel to the tapering wall portion.

6. Pressure sensor according to one of Claims 3 to 5, in which the pressure chamber (102) has a cylindrical wall portion which is arranged between the small orifice and the tapering wall portion.

7. Pressure sensor according to one of the preceding claims, with a pressure compensation element (121) which is designed to afford pressure compensation between the pressure chamber (102) and the surroundings of the pressure sensor.

8. Pressure sensor according to one of the preceding claims, in which the small and/or the large orifice have/has a rectangular cross section.

9. Pressure sensor according to one of the preceding claims, with a cover (111) which is designed to cover a side of the diaphragm (103) which lies opposite the pressure chamber (102).

10. Pressure sensor according to Claim 7, in which the cover (111) has an orifice with a contiguous pressure inlet duct (112), the pressure inlet duct spanning the orifice completely.

## Revendications

1. Capteur de pression, qui est approprié en tant que capteur de coussin gonflable de sécurité d'un véhicule, possédant les caractéristiques suivantes :
une chambre de pression (102) dotée d'une petite ouverture et d'une grande ouverture ;
un élément de capteur de pression (101) doté d'une surface de réception de pression, et
une membrane (103) qui est conçue pour fermer la grande ouverture,
**caractérisé en ce que** l'élément de capteur de pression est conçu pour fermer complètement la petite ouverture au moins à l'aide de la surface de réception de pression.

2. Capteur de pression selon la revendication 1, dans lequel la chambre de pression (102) comprend une section de paroi se rétrécissant dans la direction de la petite ouverture.

3. Capteur de pression selon la revendication 2, dans lequel la section de paroi se rétrécissant est rectiligne.

4. Capteur de pression selon la revendication 2, dans lequel la section de paroi se rétrécissant est courbe.

5. Capteur de pression selon la revendication 2, dans lequel la membrane (103) présente une courbure prédéfinie lorsque la pression devant être détectée est maximale, et dans lequel la section de paroi se rétrécissant présente une forme qui est adaptée à la courbure prédéfinie, de telle sorte que la membrane s'étende au moins par sections parallèlement à la section de paroi se rétrécissant lorsque la pression devant être détectée est maximale.

6. Capteur de pression selon l'une quelconque des revendications 3 à 5, dans lequel la chambre de pression (102) comprend une section de paroi cylindrique qui est disposée entre la petite ouverture et la section de paroi se rétrécissant.

7. Capteur de pression selon l'une quelconque des revendications précédentes, comprenant un élément d'équilibrage de la pression (121) qui est conçu pour produire un équilibrage de la pression entre la chambre de pression (102) et un voisinage du capteur de pression.

8. Capteur de pression selon l'une quelconque des revendications précédentes, dans lequel la petite et/ou la grande ouverture présentent une section transversale rectangulaire.

9. Capteur de pression selon l'une quelconque des revendications précédentes, comprenant un recouvrement (111) qui est conçu pour recouvrir un côté de la membrane (103) opposé à la chambre de pression (102).

10. Capteur de pression selon la revendication 7, dans lequel le recouvrement (111) comprend une ouverture dotée d'un canal d'entrée de pression adjacent (112), le canal d'entrée de pression recouvrant complètement l'ouverture.
